Europäisches Patentamt

European Patent Office

Office européen des brevets

(19)

(11) EP 0 661 559 B1

(12) FASCICULE DE BREVET EUROPEEN

(45) Date de publication et mention
de la délivrance du brevet:
**05.08.1998 Bulletin 1998/32**

(51) Int Cl.⁶: **G02B 5/122**

(21) Numéro de dépôt: **94403030.3**

(22) Date de dépôt: **27.12.1994**

(54) **Rétroréflecteur pour géodésie laser, à correction omnidirectionnelle d'aberration de vitesse**

Retroreflektor für geodätischen Laser mit richtungsunabhängiger Korrektur der
Geschwindigkeitsaberration

Retroreflector for laser beam survey with omnidirectional correction of speed aberration

(84) Etats contractants désignés:
DE GB IT

(30) Priorité: **31.12.1993 FR 9315973**

(43) Date de publication de la demande:
**05.07.1995 Bulletin 1995/27**

(73) Titulaire: **AEROSPATIALE Société Nationale
Industrielle**
**75781 Paris Cédex 16 (FR)**

(72) Inventeur: **Lund, Glenn Innes**
**F-06440 Peillon (FR)**

(74) Mandataire: **Rinuy, Santarelli**
**14, avenue de la Grande Armée**
**75017 Paris (FR)**

(56) Documents cités:
**EP-A- 0 506 517         EP-A- 0 571 256**
**US-A- 2 172 660**

• **APPLIED OPTICS, vol.31, no.28, 1 Octobre 1992,
NEW YORK US pages 6015 - 6020 A.MINATO ET
AL. 'OPTICAL DESIGN OF CUBE-CORNER
RETROREFLECTORS HAVING CURVED
MIRROR SURFACES'**

## Description

L'invention concerne la télémétrie laser, en particulier la télémétrie laser entre deux corps artificiels (par exemple satellites en orbite, véhicules spatiaux) et/ou naturels (par exemple la Terre, la Lune ou autre planète) en mouvement relatif, dont la vitesse relative transverse approche voire dépasse une valeur de l'ordre du kilomètre par seconde.

La télémétrie laser consiste aujourd'hui à mesurer le temps mis par une impulsion laser pour faire l'aller-retour entre une station laser terrestre et un satellite (ou la Lune) et à convertir ensuite (en tenant compte de la correction de divers effets déterministes) cette mesure de temps en une distance (instantanée) entre un point de référence de la station laser et le centre de masse du satellite (ou un point de référence de la Lune).

La télémétrie laser s'étend dans ce qui suit au cas où la mesure de distance se fait, dans un sens ou dans l'autre, entre satellites entre eux, voire plus généralement entre objets célestes, naturels ou artificiels.

Il est utile de rappeler que toutes les solutions de satellite "laser" orbitant à ce jour autour de la Terre (telles que LAGEOS I et II, AJISAI, STARLETTE et STELLA) ont été conçues à une époque où la télémétrie laser n'était que peu précise et les lasers employés peu puissants (par rapport à ce qu'on sait réaliser aujourd'hui). Ces satellites étaient donc optimisés de façon à assurer qu'il y ait de nombreux petits rétroréflecteurs en "coin de cube" capables, pour toute orientation du satellite, de renvoyer vers la station d'émission une quantité de lumière suffisante pour être détectée. Peu importait qu'ils ne soient pas tous exactement à la même distance de cette station d'émission, à quelques centimètres, voire décimètres, près.

Depuis quelques années la situation a beaucoup évolué, de telle sorte qu'avec les stations de télémétrie laser actuelles, la durée des impulsions peut descendre jusqu'à de l'ordre d'une dizaine de picosecondes (1 ps = $10^{-12}$ secondes) et la précision de mesure sur un écho unique n'est pas loin d'atteindre le millimètre. Il n'en va pas de même pour la précision finale des mesures réalisées, à cause notamment de la multiplicité des échos (un écho par rétroréflecteur visible par l'émetteur laser à l'instant du tir) qui provoque un étalement temporel des impulsions de retour, lesquels échos ne peuvent être associés de façon individuelle et précise à la distance instantanée du centre de masse du satellite vis-à-vis de la station laser.

La vitesse entre satellite et station laser conduit à un phénomène d'aberration de vitesse que l'on a cherché à corriger, sur les satellites existants, en donnant, aux angles entre les faces réfléchissantes des coins de cube élémentaires, de faibles écarts par rapport à la valeur nominale de 90°.

D'autre part, ces coins de cube, généralement pleins, sont volontairement conçus de petite taille (3 à 4 cm de diamètre), pour deux raisons :

- la figure de diffraction de l'onde lumineuse qu'ils renvoient est formée, grâce aux effets produits par les petits défauts d'angle, plutôt que de six lobes distincts et disjoints, d'une sorte de couronne continue dont le rayon et la largeur correspondent aux valeurs nécessaires pour une compensation adéquate de l'aberration de vitesse,

- grâce aux petites dimensions des coins de cube, les gradients de température susceptibles d'apparaître à l'intérieur du verre constituant ces coins de cube restent faibles, avec par conséquent de faibles effets de dégradation de la figure de diffraction résultante.

Pour les raisons de choix de petite taille évoquées ci-dessus, on obtient des réflecteurs dont le rendement (en termes de fraction d'énergie renvoyée vers l'émetteur) est faible. Vu l'énergie moyenne des impulsions émises par les stations de télémétrie laser d'il y a 10 à 15 ans, il a été nécessaire d'équiper les satellites de réflecteurs en grand nombre afin qu'une quantité de lumière suffisante revienne au télescope de réception. Ainsi, tous ces satellites actuellement en orbite utilisent les mêmes principes et emploient de nombreux coins de cube (de 60 à plus de 2000 selon les cas), de sorte que leur efficacité optique est pratiquement indépendante de leur orientation vis-à-vis de la station d'émission. La conséquence en est obligatoirement un étalement temporel (caractérisé par une "signature") de l'impulsion renvoyée.

Même avec des outils de télémétrie laser très évolués, cet effet d'étalement temporel rend pratiquement impossible, à partir d'une seule impulsion émise, la détermination de la distance des satellites laser avec une précision absolue meilleure que le centimètre.

Dans ces conditions, on ressent le besoin de satisfaire, dans la mesure du possible, les besoins suivants :

- le retour vers le récepteur de la station d'émission d'une quantité suffisante de flux (énergie) à l'aide d'une correction adéquate de l'aberration de vitesse, tout en minimisant la "signature" temporelle (il est admis qu'il n'est pas essentiel que l'efficacité de rétroréflexion du satellite soit constante au cours des mouvements (éventuellement mal connus) de celui-ci) ;

- l'élimination de toute influence pouvant élargir temporellement les impulsions renvoyées par le satellite ;

- l'obtention d'une incertitude quasi-nulle (idéalement inférieure ou égale à 1 mm), quelle que soit la géométrie d'incidence des impulsions lumineuses sur le satellite, dans la détermination de la distance entre un point de référence de la station laser et le centre de masse du satellite, à partir des mesures de distance des rétroréflecteurs.

Dans le contexte des besoins de la géodésie évoqués ci-dessus, il a déjà été proposé, dans les documents EP-A-0 506 517 et dans EP-A-0 571 256, d'assembler un petit nombre de grands rétroréflecteurs sur une structure commune, de façon à constituer un microsatellite géodésique permettant aux stations existantes et futures d'atteindre une précision de mesure millimétrique dans la mesure des grandes distances.

L'utilisation de grands rétroréflecteurs en coins de cube (RCC en abrégé) creux (plutôt que pleins sur les satellites actuels) devrait permettre un dimensionnement adéquat du bilan énergétique obtenu avec le système satellite + RCC. Compte tenu de l'énergie et de la durée des impulsions émises par les stations modernes de télémétrie laser, en supposant des altitudes d'orbite pour ce type de satellite comprises entre 300 et 6000 km au-dessus de la Terre, et compte tenu de l'étalement angulaire de l'énergie rétrodiffractée par les RCC et de la taille typique du télescope de réception d'une telle station (diamètre de pupille de l'ordre de 50 cm), on peut démontrer qu'un rétroréflecteur unique, caractérisé par un diamètre d'entrée typiquement compris entre 10 et 20 cm, peut satisfaire les besoins du système en bilan énergétique.

Il est admis que la longueur des impulsions laser émises peut être typiquement entre 10 ps et 50 ps (en largeur à mi-hauteur) et qu'à la rigueur un seul photon détecté au retour suffit pour identifier un RCC et en déterminer la distance (comme c'est le cas actuellement dans la télémétrie laser entre la Terre et la Lune). L'incertitude d'une telle mesure dépend de l'énergie des impulsions détectées ; elle varie, en première approximation, avec l'inverse de la racine du nombre de photons détectés, de sorte que si, par exemple, une impulsion émise avec une largeur de 50 ps permet d'atteindre une incertitude de mesure de 1 mm pour une dizaine de photons détectés au récepteur, ce même résultat serait vraisemblablement obtenu pour un seul photon dans le cas d'une impulsion de largeur 15 ps. Il faut noter que ce type de raisonnement, valable dans le cas d'un écho unique, ne peut être appliqué au cas des satellites laser classiques car la multiplicité des échos de retour provenant de ceux-ci implique une ambiguïté quant à la relation entre la distance mesurée aux réflecteurs associés aux photons détectés, et celle (souhaitée) au centre de masse du satellite, ces distances étant mesurées à partir de l'émetteur/récepteur laser.

Il est intéressant de noter ici que, comme cela est déjà indiqué dans le document EP-0 506 517 précité, lorsqu'un post-traitement des mesures de distance est prévu, la précision des mesures corrigées peut être largement supérieure à leur précision individuelle intrinsèque.

Il est possible de trouver un diamètre de rétroréflecteur suffisant pour éviter d'avoir à imposer de trop sévères tolérances sur la réalisation optique de ses faces réfléchissantes. En effet, les mêmes besoins en bilan énergétique (ou en nombre moyen de photons détectés par impulsion émise) peuvent être satisfaits, plutôt qu'avec un grand nombre de RCC d'une dimension réduite, avec un très petit nombre de RCC creux caractérisés par une plus grande taille. On peut remarquer que, contrairement au cas des RCC pleins couramment utilisés dans les satellites laser classiques, il n'y a pas de limite pratique à la dimension des RCC creux.

A titre d'exemple, les inventeurs connaissent la réalisation d'un RCC de diamètre 50 cm (appelé R.I.S.) pour la mission ADEOS de l'Agence Spatiale Japonaise.

A titre d'autre exemple, permettant d'assurer des échos de retour uniques et sans ambiguïté, on connaît selon la demande de brevet EP-A-0 571 256 précitée, un ensemble de 8 coins de cube ayant leurs sommets à proximité les uns des autres.

Dans le cas de coins de cube creux ayant leurs sommets à proximité les uns des autres, seuls les rayons en incidence rasante par rapport à la face réfléchissante d'un des coins de cube (et par conséquent d'efficacité nulle au retour vers la station) peuvent éventuellement être dans la zone de visibilité d'un ou plusieurs des RCC voisins. Comme il s'agit d'un cas rare, on peut admettre que cette configuration est caractérisée par un non-recouvrement de champ de vue des rétroréflecteurs, c'est-à-dire conduisant à un écho unique détecté au retour.

La question se pose alors de corriger l'aberration de vitesse dans le cas d'un seul gros réflecteur lorsque l'on cherche à s'abstraire d'une quelconque exigence en contrôle d'attitude ou plus généralement en orientation relative entre émetteur/récepteur laser (E/R) et RCC.

C'est ce problème, dans le contexte précité, que l'invention vise à résoudre.

On comprend aisément que la solution la plus générale pour la correction de l'aberration de vitesse, dans le cas d'un satellite non-stabilisé, consiste à vouloir donner au diagramme de diffraction à l'infini de chacun des rétroréflecteurs une forme en anneau uniforme, bordée par des courbes limites correspondant aux distances angulaires égales aux extrêmes de la valeur de l'aberration de vitesse à corriger (par exemple typiquement entre 6 et 10 secondes d'arc pour un satellite en orbite à 800 km d'altitude au-dessus de la Terre).

La demande de brevet EP-A-0 571 256 a proposé une solution à seulement deux lobes de diffraction, mais cette solution n'est envisageable que lorsque l'on connaît à l'avance l'orientation relative entre E/R et RCC et que cette orientation relative reste sensiblement constante.

Dans le cas général où cette orientation relative varie au cours du temps ou est mal connue, il apparaît nécessaire de conserver pour la figure de diffraction une forme annulaire ce que, on l'a vu précédemment, on ne sait pas faire en combinaison avec l'obtention d'un flux d'énergie reçue important par rapport au flux émis, pour de grandes distances entre E/R et RCC.

L'invention prévoit pour ce faire de donner à la surface d'onde après réflexion une forme de révolution aussi proche que possible d'un cône. Afin d'obtenir une telle déformation de l'onde lumineuse réfléchie, l'invention enseigne plus précisément d'employer un RCC dont les facettes ont une surface réfléchissante au moins approximativement, de façon continue ou discrète (possibilité de gradins), légèrement conique.

Plus précisément, l'invention propose un rétroréflecteur en coin de cube pour télémétrie laser, destiné à corriger l'angle d'aberration de vitesse δ due au déplacement relative entre le rétroréflecteur et la station laser associée, le rétroréflecteur comportant trois facettes réfléchissantes sensiblement orthogonales entre elles et définissant trois arêtes sensiblement orthogonales et convergeant en un sommet, chaque arête étant associée à celle des facettes qui lui est sensiblement orthogonale, les trois facettes étant soit toutes concaves soit toutes convexes vis à vis du volume en coin de cube du rétroréflecteur, caractérisé en ce que :

- chaque facette a une forme qui est au moins approximativement celle d'une portion de cône d'axe confondu avec l'arête associée, chacune des génératrices de cette portion de cône ayant une pente moyenne de génératrice non nulle vis à vis d'un plan perpendiculaire à l'axe de cette portion de cône, la pente moyenne de la facette pour l'ensemble des génératrices, étant elle aussi non nulle vis à vis dudit plan,
- le long de toute génératrice de chaque facette, la pente locale (ou courante) est constante à moins de 20 % près, et
- ladite pente moyenne de chaque génératrice de chaque facette est à moins de 30 % de la moyenne $\alpha_o$ des pentes moyennes des trois facettes,
- le rétroréflecteur assurant ainsi une correction de la valeur de l'angle d'aberration de vitesse δ satisfaisant au moins approximativement à la relation

$$\alpha_o = 0,2 . \delta/k$$

où k est un paramètre intrinsèque du rétroréflecteur dépendant du nombre, de la géométrie et du ou des indices de réfraction du ou des milieux constituant le volume dudit rétroréflecteur.

Selon des dispositions préférées, éventuellement combinées :

- au moins une facette est formée d'au moins deux sous-facettes planes triangulaires contiguës en une ligne de cassure, les bords de chaque sous-facette ayant, vis à vis du plan perpendiculaire à l'axe de ladite facette, des pentes sensiblement égales,
- chaque facette est constituée de sous-facettes sensiblement identiques,
- chaque facette est constituée de deux sous-facettes identiques,
- les trois facettes sont identiques,
- chaque facette comporte le long de ses génératrices, au moins une succession de marches coaxiales, des marches adjacentes définissant une pente locale de génératrice,
- ladite facette comporte au moins deux successions de marches parallèles séparées par une transition dont la hauteur parallèle à l'axe de la facette correspond à un saut de phase égal à un multiple de 2 n au moins égal à 1,
- la pente locale des génératrices de l'une au moins des facettes varie en fonction de la distance audit sommet,
- cette pente locale varie de façon monotone,
- la pente des génératrices d'une facette varie circonférentiellement entre les arêtes bordant cette facette,
- le volume dudit rétroréflecteur est vide, et le coefficient k vaut 1,
- le volume dudit rétroréflecteur est constitué d'un matériau homogène d'indice de réfraction n, et le coefficient k vaut

$$k = n . cos \frac{[arc \: sin((sin \: i_0) \: / n)]}{cos \: i_0}$$

où $i_0$ vaut au moins approximativement 30°
- le volume dudit rétroréflecteur comporte le long des surfaces réfléchissantes des facettes des lames homogènes d'indice de réfraction n, et est vide entre ces lames, et le coefficient k vaut :

$$k = \sqrt{3} . \cos [Arcsin (\sqrt{2/3} . 1/n)]$$

On peut noter qu'il a déjà été propose un RCC à faces courbes, connu sous la référence RIS (déjà citée plus haut) et qui fait l'objet de l'article intitulé "Optical design of cube-corner rétroréflectors having curved mirror surfaces" de MINATO, SUGIMOTO et SASANO - Appl. Opt. Vol. 31, n° 28, p 6015, 1992. Il y est décrit un moyen d'élargissement des lobes de diffraction qui met en oeuvre, en combinaison, une sphérisation d'une à trois des facettes réfléchissantes et la correction d'un des angles dièdre d'un coin de cube creux. Mais cette approche est destinée à l'utilisation d'un RCC embarqué sur une plate-forme stabilisée, où la combinaison des effets de sphérisation des facettes avec celui (connu) donné par la correction d'un seul angle dièdre permet d'obtenir deux lobes de diffraction élargis au sol. Cette solution n'est pas destinée aux applications sans stabilisation de l'orientation des réflecteurs, et prévoit ni l'utilisation de surfaces coniques, ni la génération d'un lobe de diffraction ayant une forme annulaire.

En réalité l'écart de la forme des surfaces réfléchissantes par rapport à un plan parfait est très faible, atteignant typiquement quelques multiples de la longueur d'onde du rayonnement à réfléchir (cette dernière est située typiquement dans le domaine "visible" ou proche infrarouge de la lumière, à savoir entre 400 et 1200 nanomètres). Pour ce qui concerne la réalisation des coins de cube à facettes coniques, il peut être envisagé d'utiliser le polissage, la photogravure ou la technique de réplique, ou une combinaison de ces moyens, afin d'aboutir à la qualité optique nécessaire.

Une autre approche possible consiste à discrétiser la forme des facettes de RCC, en "découpant" une ou plusieurs des trois facettes en un arrangement de sous-facettes planes juxtaposées. C'est ainsi que les facettes peuvent être formées de sous-facettes planes triangulaires (ou toute autre forme avec deux arêtes convergeant en un sommet) centrées au sommet du RCC et inclinées les unes par rapport aux autres, en se touchant par leurs bords de façon à créer une surface continue assimilable à une portion de parapluie chinois très aplati avec des variations circonférentielles de pente. Ceci est en fait une approximation discrétisée de la forme conique (et continue) évoquée ci-dessus.

La figure de diffraction globale ainsi obtenue est une distribution d'énergie lumineuse formant une sorte d'anneau polygonal qui donne une approximation acceptable de l'anneau uniforme idéal.

On peut également admettre des solutions imparfaites, donnant lieu à des figures de diffraction qui, selon l'angle d'incidence sur le coin de cube, sont incomplètes ou partiellement annulaires ; étant donnée la cadence élevée (typiquement de l'ordre de 10 Hz) des tirs laser utilisée aujourd'hui dans la télémétrie à grande distance, et le fait que l'angle d'incidence des impulsions par rapport à la normale des RCC peut varier au cours du temps à cause du mouvement relatif entre ce RCC et l'émetteur/récepteur E/R, il est généralement admis que l'on peut accepter un taux raisonnable (50 % voire plus) de retours nuls ou peu énergétiques, à condition qu'il y ait de temps en temps (au moins de l'ordre de 1 fois/ sec) des signaux de retour suffisamment énergétiques pour les besoins de la mesure (ceci est à rapprocher du cas de la télémétrie entre des stations sol et des panneaux réflecteurs sur la Lune, bien que dans cette application la fréquence des "bons" retours (à savoir constitués d'au moins 1 photon) est typiquement inférieure à une fois toutes les 5 secondes).

De cette manière, on peut admettre le principe d'une annularité imparfaite dans la figure de diffraction des RCC, donnant lieu au cours du temps à une succession d'échos de retour tantôt énergétiques, tantôt faibles, selon l'orientation relative instantanée entre E/ R et RCC.

Des objets, caractéristiques et avantages de l'invention ressortent de la description qui suit, donnée à titre d'exemple non limitatif, en regard des dessins annexés sur lesquels :

- la figure 1 est une vue schématique en perspective d'un rétroréflecteur en coin de cube conforme à l'invention,
- la figure 2 est la figure de diffraction du rétroréflecteur de la figure 1 pour une incidence normale et une correction d'aberration de vitesse de 9 secondes d'arc en moyenne,
- la figure 3 est la même figure de diffraction correspondant à une incidence de 15° par rapport à la normale,
- la figure 4 est une vue schématique d'une facette de rétroréflecteur formée de deux sous-facettes planes,
- la figure 5 est une figure de diffraction, pour une incidence normale, d'un rétroréflecteur dont chacune des facettes est conforme à la figure 4,
- la figure 6 est une figure de diffraction pour le même rétroréflecteur, pour une incidence de 15°,
- la figure 7 est une figure de diffraction pour un autre rétroréflecteur à facettes présentant des inclinaisons différentes, pour une incidence normale,
- la figure 8 est une figure de diffraction, pour une incidence normale, dans le cas d'un rétroréflecteur à facettes présentant des inclinaisons encore plus différentes qu'à la figure 7,
- la figure 9 est une vue de dessus d'une facette de rétroréflecteur formée de marches parallèles annulaires,
- la figure 10 est une vue en coupe de la facette de la figure 9, selon la ligne X-X, et
- la figure 11 est une vue en coupe d'une autre facette avec plusieurs groupes de marche.

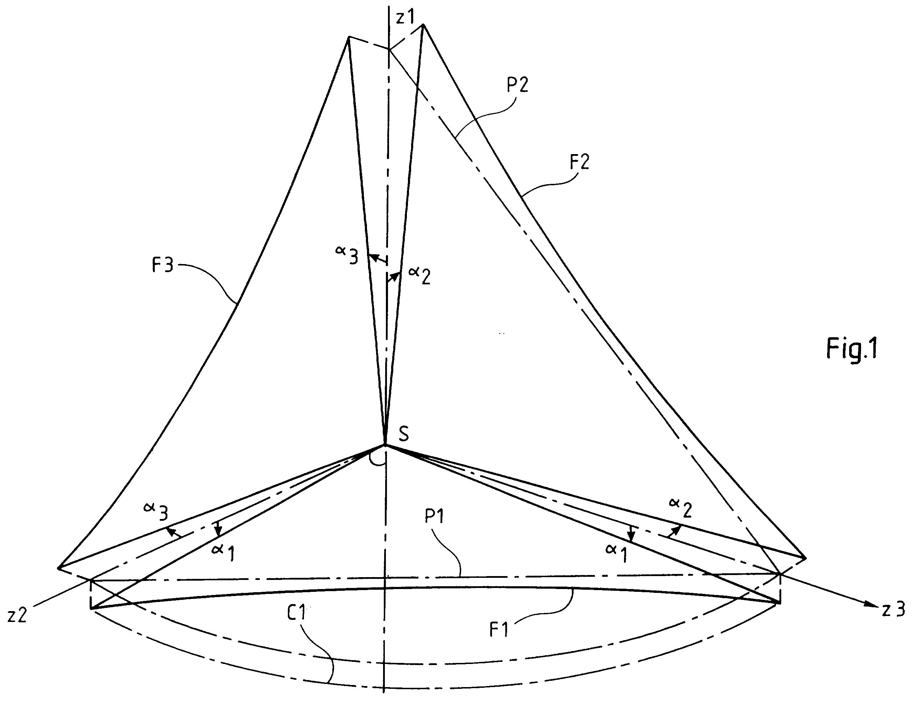

Le rétroréflecteur en coin de cube (RCC en abrégé) représenté sous la référence générale 1 à la figure 1 peut être monté sur un micro-satellite (satellite de moins de 100 à 200 kg) par exemple dédié à une mission de géodésie, sur un satellite de plus grande taille destiné à des missions quelconques (observation par exemple et dont on veut pouvoir suivre avec précision la position et l'orbite au cours du temps (par exemple pour en recalibrer les instruments d'observation)), sur un autre corps céleste tel que la Lune, ou encore sur Terre en combinaison avec une station d'émission/réception embarquée sur un satellite.

Ce rétroréflecteur 1 est avantageusement creux, ce qui, par rapport à une géométrie pleine, conduit à une plus faible masse, à l'élimination de la plupart des dégradations optiques engendrées par le problème des gradients thermiques dans le verre, et à une plus grande facilité de réalisation, même si on donne une grande taille à ce rétroréflecteur ("diamètre" d'entrée d'au moins 10 cm).

Soit $\delta$ la valeur de l'angle d'aberration de vitesse que l'on cherche à compenser, du fait du déplacement relatif rapide entre ce rétroréflecteur et la station laser associée et soit $\lambda$ la longueur d'onde moyenne du rayonnement laser à rétroréfléchir.

Pour assurer une correction omnidirectionnelle correspondant à une valeur donnée d'aberration de vitesse, on cherche à donner à la figure de diffraction du RCC une forme annulaire, de rayon angulaire $\delta$, avec une distribution d'énergie aussi homogène que possible.

En pratique l'aberration de vitesse à corriger varie au cours du temps, en fonction des orientations relatives instantanées du vecteur de vitesse relative et de la direction reliant l'émetteur/récepteur laser et le RCC. C'est pourquoi la correction d'aberration de vitesse doit se faire pour une bande de valeurs s'étendant typiquement entre 0,8 $\delta$ et 1,2 $\delta$, si $\delta$ est la valeur moyenne de l'aberration de vitesse à compenser.

Par exemple, ladite valeur moyenne $\delta$ est de l'ordre de 3,5" d'arc pour une orbite géostationnaire (altitude de 36.000 km), et de l'ordre de 9" d'arc pour une orbite basse de 400 km d'altitude (au-dessus de la surface de la Terre).

Pour obtenir cette forme annulaire, l'invention enseigne de donner à chacune des facettes de ce RCC une forme présentant en tout point, vis à vis d'une facette rigoureusement plane fictive, un écart (à des multiples près de la longueur d'onde $\lambda$) d'autant plus important que l'on s'éloigne du sommet S du RCC.

Plus précisément, ce RCC comporte trois arêtes fictives z1, z2 et z3 convergeant au sommet S et trois facettes réfléchissantes F1, F2 et F3 dont la forme est au moins approximativement une portion d'un cône C1, C2 ou C3 d'axe confondu avec l'arête z1, z2 ou z3 respectivement.

Si on désigne par P1, P2 et P3 les plans fictifs perpendiculaires aux arêtes fictives z1, z2 et z3 respectivement et passant par les deux autres arêtes, toutes les génératrices de C1 (passant par S) font un angle (ou pente) $\alpha_1$ avec P1, toutes les génératrices de C2 font un angle $\alpha_2$ avec P2 et toutes les génératrices de C3 font un angle $\alpha_3$ avec P3.

En d'autres termes, les facettes F1, F2 et F3 sont caractérisées respectivement par une pente $\alpha_1$, $\alpha_2$ et $\alpha_3$.

De manière préférée, les valeurs de $\alpha_1$, $\alpha_2$ et $\alpha_3$, constantes sur l'ensemble de la facette considérée (les génératrices étant ici supposées rectilignes), et sont égales à une même valeur $\alpha_0$.

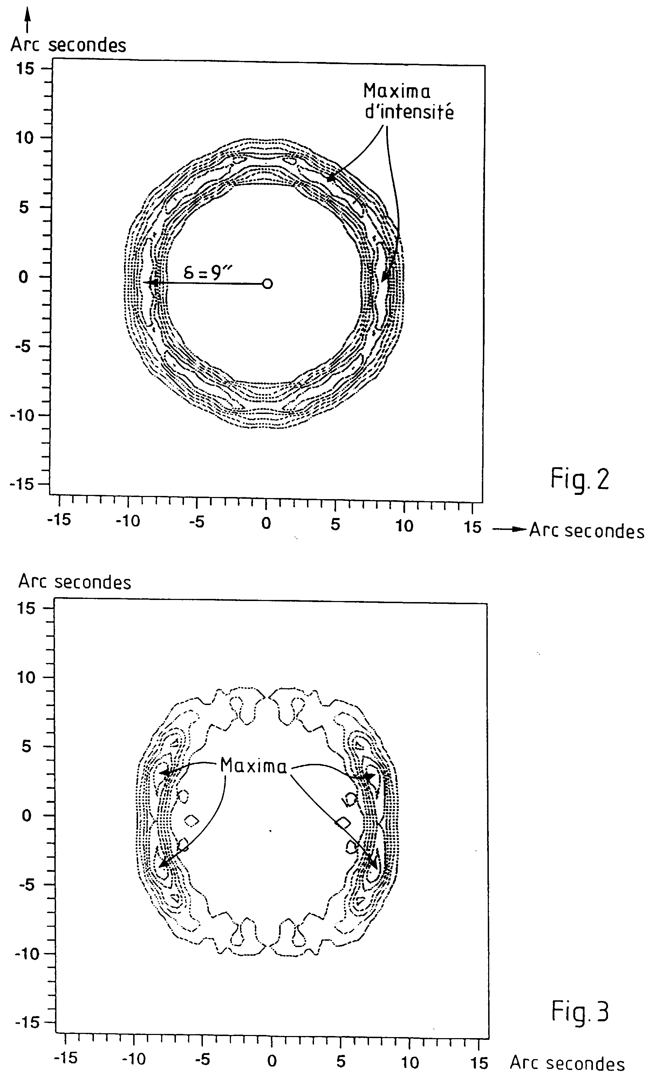

Les figures 2 et 3 montrent les figures de diffraction obtenues par simulation pour des facettes exactement coniques et identiques, avec une valeur de $\alpha_0$, égale à 1,8" pour des incidences de rayonnement de 0° et de 15° par rapport à la normale de ce RCC (c'est-à-dire la direction passant par S et faisant un même angle vis à vis des trois arêtes). Le RCC était creux et avait un diamètre d'entrée de 100 mm ; le rayonnement incident avait une longueur d'onde de 500 nm.

On obtient, d'après ces figures, approximativement une même valeur pour $\delta$, telle que l'on a

$$\alpha_0 = 0,20 \ \delta$$

Cette relation peut se démontrer.

On peut généraliser la relation précédente sous la forme :

$$\alpha_0 = 0,2 \ \delta/k$$

où k est un paramètre géométrique prédéterminé, dépendant du nombre, de la géométrie et de l'indice de réfraction du (ou des) matériaux constituant le volume du rétroréflecteur.

Dans le cas précité d'un RCC complètement creux, le coefficient k est égal à l'indice de réfraction du vide, c'est-à-dire 1.

On peut démontrer que si le rayonnement traverse entre les trois facettes un matériau homogène transparent d'indice de réfraction $\underline{n}$ (par rapport au vide), par exemple dans le cas où le RCC est plein, la relation précédente devient :

$$k = n.\frac{\cos[Arc \ \sin((\sin i_o)/n)]}{\cos \ i_o}$$

où $i_o$ est l'angle d'incidence moyenne des rayons incidents par rapport à la normale du RCC ; pour un angle maximal d'incidence de 40° on trouve que $i_o$ vaut environ 30° ; une expression approchée de la relation précitée est

$$k \sim 1,09 \ n$$

Par contre, dans le cas par exemple où le rétroréflecteur est généralement creux, mais où les surfaces réfléchissantes (facettes) sont formées sur l'arrière de lames homogènes de même indice n de réfraction, on peut calculer que :

$$k = \sqrt{3} \ . \ \cos \ [Arcsin \ (\sqrt{2/3} \ . \ 1/n)]$$

La largeur de la forme annulaire des figures de diffraction précitées (figures 2 et 3) est d'environ 1,5" (elle est d'autant plus étroite que le diamètre du RCC est grand).

Si l'on veut élargir cette forme annulaire, on peut faire varier la valeur courante (ou locale) $\alpha$ de la pente de génératrice au sein de chaque facette, par exemple en "bombant" les génératrices du cône (par exemple en donnant à leur pente locale une variation parabolique) ou en donnant une forme ondulée aux facettes (les génératrices étant rectilignes mais ayant des pentes différentes d'une génératrice à l'autre). Si les valeurs extrêmes de $\alpha$ sont $\alpha_{min}$ et $\alpha_{max}$, on peut montrer que l'élargissement supplémentaire $\Delta$ de l'anneau, en cas de variation monotone de la pente $\alpha$, est donné dans le cas d'un RCC creux par la relation approximative :

$$\Delta \sim 5\ (\alpha_{max} - \alpha_{min})$$

Il va de soi, pour l'homme de métier, que la simplicité de la relation précitée cache une forme rigoureuse mais plus complexe du calcul de la diffraction faisant intervenir une transformation de FOURIER.

Les paramètres $\alpha_1$, $\alpha_2$ et $\alpha_3$ désignent alors les pentes moyennes des facettes F1, F2 et F3.

A la figure 1, les angles $\alpha_1$, $\alpha_2$ et $\alpha_3$ sont tels que les facettes ont leur convexité orientée vers la normale du RCC, c'est-à-dire vers les rayons à rétroréfléchir.

Les mêmes résultats sont obtenus si toutes les facettes ont leur concavité orientée vers la normale.

Il n'est en fait pas nécessaire que les angles $\alpha_1$, $\alpha_2$ et $\alpha_3$ soient exactement égaux ($\alpha_0$ désignant alors la moyenne des pentes moyennes de facette $\alpha_1$, $\alpha_2$, $\alpha_3$). Cela sera détaillé ci-dessous.

Il apparaît en pratique que la réalisation de surfaces coniques polies n'est pas très aisée ; c'est la raison pour laquelle diverses approximations sont proposées par l'invention.

Tout d'abord la forme conique peut être approximée par la juxtaposition, l'une à côté de l'autre, de plusieurs sous-facettes planes présentant chacune un écart angulaire non nul (de préférence identique) vis à vis du plan fictif P1, P2 ou P3. Bien entendu, l'étendue angulaire globale des sous-facettes d'une facette vaut 90° (la géométrie résultante ressemble à celle d'un parapluie - très aplati - à baleines rectilignes).

De préférence, mais pas nécessairement, les sous-facettes sont identiques, avec une même étendue angulaire (90°/N s'il y a N sous-facettes) et une même pente moyenne $\alpha_{sfij}$ où l'indice i désigne le numéro de la sous facette concernée, et où l'indice j désigne le numéro de la facette concernée.

On comprend aisément que l'approximation de la surface conique souhaitée est d'autant meilleure que le nombre de sous-facettes est élevé.

Il apparaît toutefois qu'une approximation par deux sous-facettes est déjà tout à fait satisfaisante, pour un diamètre de RCC de l'ordre de 10 cm et des longueurs d'onde dans le domaine visible (400 à 700 nm). Dans le cas d'un diamètre de RCC sensiblement plus grand, une augmentation du nombre $\underline{N}$ de sous-facettes peut s'avérer nécessaire afin de maintenir suffisante l'uniformité circonférentielle de l'anneau de diffraction.

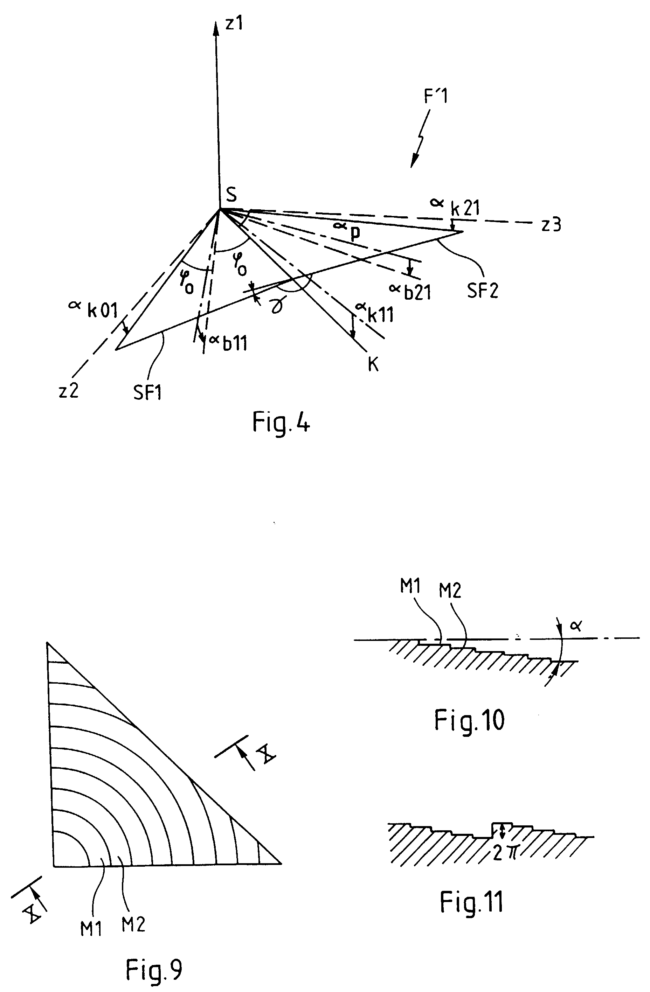

La figure 4 représente une telle facette F'1 présentant une cassure K séparant deux sous-facettes SF1 et SF2.

On désigne par $\alpha_{kij}$ les angles (ou pentes) que font les divers bords des sous-facettes planes avec le plan fictif $P_j$ de la facette F'$_j$, où i vaut soit 0 (pour l'une des arêtes de la facette j) soit le numéro de la sous-facette considérée (pour tous les bords - par exemple les bords de droite - des sous-facettes) ; de même on désigne par $\alpha_{bij}$ la pente vis-à-vis de $P_j$ de la sous-facette i de la facette j. Dans le cas de la figure 4 on observe ainsi successivement, de gauche à droite, les angles $\alpha_{k01}$, $\alpha_{b11}$, $\alpha_{k11}$, $\alpha_{b21}$ et $\alpha_{k21}$.

De préférence, les angles $\alpha_{kij}$ sont égaux au sein de chaque facette (donc pour une même valeur de j) à une même valeur $\alpha_{kj}$ ; si en outre on choisit pour les sous-facettes une même amplitude angulaire on obtient que les angles $\alpha_{bij}$ sont de préférence égaux au sein de chaque facette à une même valeur $\alpha_{bj}$. On peut vérifier que $\alpha_{kj} < \alpha_j < \alpha_{bj}$ où $\alpha_j$ est comme précédemment la pente moyenne de la facette considérée. Les écarts sont faibles. Ainsi dans le cas considéré ici de deux sous-facettes indentiques, on peut démontrer que :

$$\alpha_{kj} = 0{,}948\ \alpha_j$$

$$\alpha_{bj} = 1{,}026\ \alpha_j.$$

Dans ce qui suit on suppose que les conditions préférées précitées sont respectées et on simplifiera les notations en supprimant l'indice j (cette notation simplifiée devient exacte dans le cas où on suppose que les facettes sont identiques).

Si on désigne par $\varphi_0$ l'angle que fait la bissectrice d'une sous-facette avec chacun de ses bords, on a :

$$\varphi_0 = 90°/2N$$

On peut démontrer que pour un nombre quelconque $\underline{N}$ de sous-facettes, l'angle de cassure entre sous-facettes adjacentes identiques vaut :

$$\gamma = 2\ \alpha_k.\mathrm{tg}\ \varphi_o$$

Bien entendu, cet angle tend vers 0 lorsque $\underline{N}$ augmente.

En pratique, les techniques classiques d'interférométrie permettent facilement de contrôler l'angle de cassure entre deux sous-facettes adjacentes.

On peut vérifier que l'on peut écrire, pour toute valeur de $\underline{N}$

$$\alpha_k = \alpha_b \cos\ \varphi_o$$

On en déduit qu'avec deux sous-facettes, ce qui correspond à $\varphi_o = 22{,}5°$, on a un écart de l'ordre de 7,6 % entre les valeurs de ces deux angles $\alpha_b$ et $\alpha_k$. Cela confirme qu'un nombre de deux sous-facettes seulement par facette donne déjà une bonne approximation d'une surface conique, d'autant qu'on a vu qu'il pouvait y avoir un intérêt (pour élargir l'anneau de diffraction) à avoir des fluctuations de pente en allant d'une arête à l'autre d'une facette donnée.

En conséquence, même si il paraît plus logique de se référer, à la construction, à $\alpha_j$, il est approximativement équivalent de chercher à donner à l'un quelconque des angles $\alpha_b$ ou $\alpha_k$ la valeur $(0,2\ \delta/k)$ indiquée ci-dessus à propos de la forme conique.

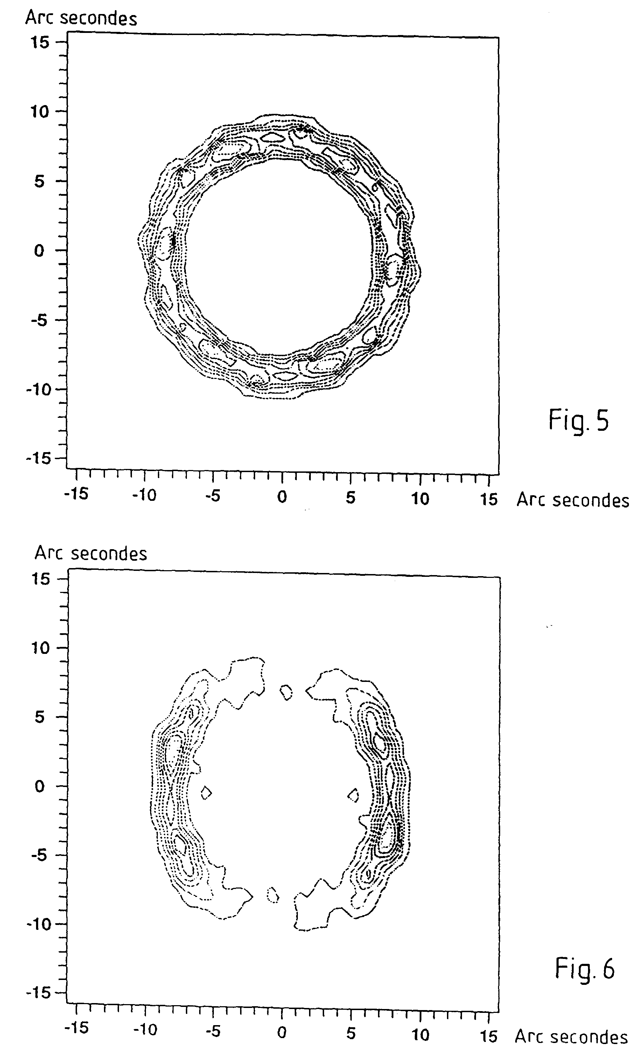

Les figures 5 et 6 montrent les figures de diffraction obtenues par simulation avec un rétroréflecteur dont chacune des trois facettes est formée de deux sous-facettes planes dont l'inclinaison des bords $\alpha_1 = 1,8"$. Comme dans le cas des figures 2 et 3, le diamètre du RCC était de 10 cm et la longueur d'onde du rayonnement était de 500 nm.

Pour une incidence normale de rayonnement, on obtient (voir la figure 5) une figure de diffraction très voisine de celles des figures 2 et 3 ; elle permet bien une correction d'une aberration de vitesse de 9".

Pour une incidence de 15° par rapport à la normale du RCC la figure de diffraction se décompose en deux demi-anneaux de rayon ici encore voisin de 9". La correction d'aberration de vitesse n'est plus tout à fait omnidirectionnelle ; on peut toutefois noter que l'on obtient des échos pour un très grand nombre d'orientations de la vitesse relative entre E/R et RCC.

Des résultats encore légèrement meilleurs seraient obtenus pour trois sous-facettes par facette.

Les facettes (et les sous-facettes) sont ici triangulaires, conformément à la géométrie habituelle des rétroréflecteurs. Toutefois, il est bien clair que les résultats indiqués ici ne seraient pas sensiblement changés si les facettes ou sous-facettes avaient une autre forme, polygônale ou arrondie (en secteur).

Comme indiqué ci-dessus on peut admettre que les facettes présentent des différences de pente (en passant d'une génératrice à une autre, ou le long d'une même génératrice), du moment que la moyenne des pentes des facettes respecte vis à vis de $\delta$ la relation indiquée ci-dessus (c'est-à-dire que la valeur moyenne $\alpha_0$ vaut au moins approximativement $0,20\ \delta$ pour un RCC creux)

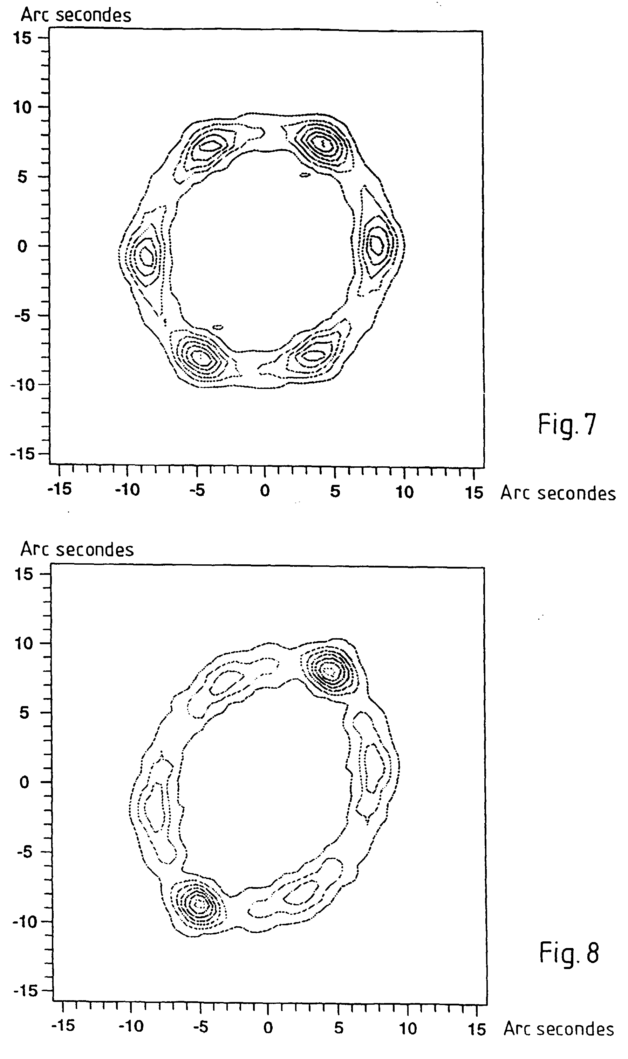

C'est ainsi que la figure 7 montre la figure de diffraction obtenue, pour une incidence normale, avec un rétroréflecteur à deux sous-facettes par facette, les pentes valant

$\alpha_1 = 0,7\ \alpha_0$ pour l'une des facettes,
$\alpha_2 = \alpha_3 = 1,15\ \alpha_0$ pour les deux autres facettes, où $\alpha_0$ est la valeur nominale donnée à partir de $\delta$ par la relation précitée

$$\alpha_0 = 0,2.\ \delta/k$$

On peut vérifier que cette valeur $\alpha_0$ est la moyenne pour les trois facettes des inclinaisons précitées.

On observe que la figure de diffraction ainsi obtenue est légèrement elliptique, avec une répartition d'énergie tout au long de l'anneau (même si on distingue clairement six lobes).

Quant à la figure 8, elle présente la figure de diffraction, sous incidence normale, d'un rétroréflecteur à deux sous-facettes par facette, avec des inclinaisons de :

$\alpha_1 = 0$ pour l'une des facettes
$\alpha_2 = \alpha_3 = 1,5\ \alpha_0$ pour les autres facettes.

$\alpha_0$ étant comme précédemment la valeur théorique d'inclinaison.

On observe que la figure de diffraction est encore plus elliptique, avec une plus grande hétérogénéité d'énergie (on observe deux lobes principaux).

Il paraît raisonnable de déduire de ces figures que l'on peut admettre pour les facettes ou sous-facettes des écarts de pente jusqu'à 30 % environ de la valeur nominale $\alpha_0$ (en considérant comme satisfaisant le cas de la figure 7), sous réserve que la moyenne réelle des diverses pentes des facettes soit sensiblement égale (par exemple à moins de 10 %) à cette valeur nominale. A cela on peut rajouter que, pour une facette donnée, la pente locale de toute génératrice passant par le sommet doit être proche (en pratique à moins de 20 %) de la valeur moyenne de cette facette.

Il faut rappeler ici que si la valeur moyenne réelle des pentes est supérieure à la valeur nominale $\alpha_0$, le rétroréflecteur serait en fait adapté à corriger de plus grandes aberrations de vitesse. Une correction adaptée à de plus faibles valeurs d'aberration vaudrait si la valeur moyenne des trois valeurs $\alpha_1$, $\alpha_2$ et $\alpha_3$ était inférieure à $\alpha_0$.

Il est à noter ici que les inclinaisons ou pentes $\alpha_{kij}$ sont mesurées selon des conventions de signe identiques vis à vis de la normale du RCC, de sorte que, en particulier, comme cela a déjà été indiqué, les facettes sont soit toutes concaves, soit toutes convexes.

En fait, il apparaît que l'obtention d'une figure de diffraction de la taille désirée provient de la différence de chemin optique induite, à chaque réflexion, par la distance que présente le point de réflexion par rapport au plan de la facette idéale (c'est-à-dire plane et perpendiculaire à l'axe z1 au sommet S, c'est-à-dire par rapport au plan P1). Par contre, l'orientation locale de la normale à la facette au point de réflexion importe beaucoup moins ; c'est pourquoi la pente locale ou courante des génératrices des facettes peut être approximée par une succession de gradins.

Les figures 9 et 10 montrent ainsi une facette formée d'une succession de marches M1, M2 ... annulaires coaxiales parallèles au plan de la feuille, mais décalées les unes par rapport aux autres, perpendiculairement au plan de la feuille, en sorte d'approximer la pente locale $\alpha$ souhaitée.

En variante, les facettes ou sous-facettes sont formées de marches non pas annulaires mais rectilignes.

La figure 11 montre une autre variante dans laquelle la génératrice des sous-facettes se décompose en tronçons ayant globalement la pente $\alpha$ souhaitée, séparés par des transitions dont la hauteur induit un déphasage (dû à la différence de marche optique) d'un multiple de 2 π.

En effet, on peut raisonner selon une approche "diffractive" ou "holographique" sur la répartition spatiale de phase de l'onde lumineuse réfléchie (ou transmise) par le RCC en question ; les calculs de diffraction tiennent compte de la phase de l'onde à diffracter, à des multiples de 2 π près.

En d'autres termes, si par exemple la pente souhaitée pour la surface conique idéale implique le long d'une génératrice une variation de différence de marche optique entre 0 et 2 λ (ce qui correspond à une variation de phase entre 0 et 4 π), on obtient les mêmes variations de phase avec deux transitions de hauteur 2 π.

Les marches précitées peuvent être réalisées, par exemple, par usinage sur une machine à outil diamanté (par exemple une machine "MOORE"), ou par photogravure.

A titre d'exemple :

-   $\delta = 10"$
-   pente globale $\alpha_0$ des escaliers formés de marches
-   longueur des côtés des facettes : 10 cm
-   hauteur de transition, (déphasage de 2 π pour une longueur d'onde de 500 nm) : de l'ordre de 500 nm.

Dans tout ce qui précède, on a raisonné en référence à des arêtes fictives.

Ainsi que cela ressort par exemple de la figure 1, les écarts à la planéité que présentent les facettes font que les bords de ces facettes ne sont pas jointifs si l'amplitude angulaire de ces facettes est très exactement 90°. En pratique, les facettes s'étendent au delà de 90° (ou en deça de 90° si les facettes sont concaves) jusqu'à intercepter les autres facettes en des arêtes réelles ; il est à noter que ces facettes ne se raccordent pas exactement à angle droit le long de ces arêtes réelles. Dans le cas où les trois valeurs de $\alpha_1$, $\alpha_2$ et $\alpha_3$ sont identiques et égales à $\alpha_o$, ce défaut d'orthogonalité est égal à l'angle γ donné par l'expression indiquée ci-dessus.

Il va de soi que la description qui précède n'a été proposée qu'à titre d'exemple non limitatif et que de nombreuses variantes peuvent être proposées par l'homme de l'art sans sortir du cadre de l'invention.

Dans le cas d'une utilisation plus générale de ce concept de RCC à correction omni-directionnelle de l'aberration de vitesse, on pourrait penser à divers scénarios où on déposerait des réflecteurs sur le sol de la terre ou d'un autre corps céleste, avec une station d'émission réception en orbite autour de ce corps. L'intérêt de générer une figure de diffraction annulaire ressort dès lors qu'on ne connaît pas ou que l'on connaît mal l'orientation relative du RCC (autour de sa normale) par rapport au mouvement apparent de l'ER (émetteur - récepteur) en orbite.

Cette méconnaissance du mouvement relatif pourrait se produire, par exemple, dans une des situations suivantes :

.   En association avec un ER en orbite, selon une inclinaison connue autour d'une planète (terre ou autre), on largue les RCCs sans orientation précise par rapport au mouvement relatif entre l'ER et la planète.
.   Des RCC sont placés sur le sol d'une planète (terre ou autre) - même de façon parfaitement connue et contrôlée - à des latitudes élevées, et sont ensuite visés depuis un satellite ER décrivant une orbite polaire ou quasi-polaire. Dans ce cas de figure, le vecteur de vitesse relative entre RCC et ER va changer d'orientation au cours du temps.
.   Des RCC sont placés sur le sol d'une planète - même de façon parfaitement connue et contrôlée - à n'importe quelle latitude, et sont ensuite visés depuis plusieurs satellites ER décrivant des orbites caractérisées par des inclinaisons diverses et variées.

## Revendications

1.  Rétroréflecteur en coin de cube pour télémétrie laser, destiné à corriger l'angle d'aberration de vitesse δ due au déplacement relative entre le rétroréflecteur et la station laser associée, le rétroréflecteur comportant trois facettes réfléchissantes (F1, F2, F3) sensiblement orthogonales entre elles et définissant trois arêtes (z1, z2, z3) sensiblement orthogonales et convergeant en un sommet (S), chaque arête étant associée à celle des facettes qui lui est sensiblement orthogonale, les trois facettes étant soit toutes concaves soit toutes convexes vis à vis du volume en coin de cube du rétroréflecteur,

    caractérisé en ce que :

    -   chaque facette a une forme qui est au moins approximativement celle d'une portion de cône (C1) d'axe confondu avec l'arête associée, chacune des génératrices de cette portion de cône ayant une pente moyenne de génératrice ($\alpha_1$; $\alpha_2$; $\alpha_3$) non nulle vis à vis d'un plan (P1;P2) perpendiculaire à l'axe de cette portion de cône, la pente moyenne de la facette pour l'ensemble des génératrices étant elle aussi non nulle vis à vis dudit plan,
    -   le long de toute génératrice de chaque facette, la pente locale est constante à moins de 20 % près, et
    -   ladite pente moyenne de chaque génératrice de chaque facette est à moins de 30 % de la moyenne $\alpha_o$ des pentes moyennes des trois facettes,
    -   le rétroréflecteur assurant ainsi une correction de la valeur de l'angle d'aberration de vitesse δ satisfaisante au moins approximativement à la relation

$$\alpha_o = 0{,}2.\delta/k$$

où k est un paramètre intrinsèque du rétroréflecteur dépendant du nombre, de la géométrie et du ou des indices de réfraction du ou des milieux constituant le volume dudit rétroréflecteur.

2. Réflecteur selon la revendication 1, caractérisé en ce que au moins une facette (F'1) est formée d'au moins deux sous-facettes planes triangulaires (SF1, SF2) contiguës en une ligne de cassure (K), les bords de chaque sous-facette ayant, vis a vis du plan (P1) perpendiculaire à l'axe (Z1) de ladite facette, des pentes ($\alpha b_{11}$, $\alpha_{b21}$) sensiblement égales.

3. Rétroréflecteur selon la revendication 2, caractérisé en ce que chaque facette est constituée de sous-facettes sensiblement identiques.

4. Rétroréflecteur selon la revendication 2, caractérisé en ce que chaque facette est constituée de deux sous-facettes identiques.

5. Rétroréflecteur selon l'une quelconque des revendications 1 à 4, caractérisé en ce que les trois facettes sont identiques.

6. Rétroréflecteur selon l'une quelconque des revendications 1 à 5, caractérisé en ce que chaque facette comporte le long de ses génératrices, au moins une succession de marches (M1, M2) coaxiales, des marches adjacentes définissant une pente locale de génératrice ($\alpha$).

7. Rétroréflecteur selon la revendication 6, caractérisé en ce que ladite facette comporte au moins deux successions de marches parallèles séparées par une transition dont la hauteur parallèle à l'axe de la facette correspond à un saut de phase égal à un multiple de $2\pi$ au moins égal à 1.

8. Rétroréflecteur selon l'une quelconque des revendications 1 à 7, caractérisé en ce que la pente locale des génératrices de l'une au moins des facettes varie en fonction de la distance audit sommet.

9. Rétroréflecteur selon la revendication 8, caractérisé en ce que cette pente locale varie de façon monotone.

10. Rétroréflecteur selon l'une quelconque des revendications 1 à 9, caractérisé en ce que la pente des génératrices d'une facette varie circonférentiellement entre les arêtes bordant cette facette.

11. Rétroréflecteur selon l'une quelconque des revendications 1 à 10, caractérisé en ce que le volume dudit rétroréflecteur est vide, et le coefficient k vaut 1.

12. Rétroréflecteur selon l'une quelconque des revendications 1 à 10, caractérisé en ce que le volume dudit rétroréflecteur est constitué d'un matériau homogène d'indice de réfraction n, et le coefficient k vaut

$$k = n.\cos\frac{[\text{arc sin}\,((\sin i_0)/n)]}{\cos i_0}$$

où $i_0$ vaut au moins approximativement 30°

13. Rétroréflecteur selon l'une quelconque des revendications 1 à 10, caractérisé en ce que le volume dudit rétroréflecteur comporte le long des surfaces réfléchissantes des facettes des lames homogènes d'indice de réfraction n, et est vide entre ces lames, et le coefficient k vaut :

$$k = \sqrt{3}\,.\,\cos\,[Arcsin\,(\sqrt{2/3}\,.\,1/n)]$$

## Patentansprüche

1. Kubuskeilförmiger Retroreflektor für Lasertelemetrie, der dazu bestimmt ist, den Winkel $\delta$ der Geschwindigkeitsaberration, die auf die relative Verschiebung zwischen dem Retroreflektor und der zugehörigen Laserstation zurückzuführen ist, wobei der Retroreflektor drei reflektierende Flächen (F1, F2, F3) aufweist, die im wesentlichen zueinander orthogonal sind und drei Kanten (z1, z2, z3) definieren, die im wesentlichen orthogonal sind und in einer Spitze (S) konvergieren, wobei jede Kante zu derjenigen der Flächen gehört, die im wesentlichen orthogonal zu ihr ist, wobei alle drei Flächen in bezug auf das kubuskeilförmige Volumen des Retroreflektors entweder konkav oder konvex sind,
    dadurch gekennzeichnet, daß:

- jede Fläche eine Form aufweist, die zumindest näherungsweise derjenigen eines Konusabschnitts (C1) mit einer Achse, die mit der zugehörigen Kante zusammenfällt, entspricht, wobei jede der Erzeugenden dieses Konusabschnitts eine mittlere Neigung der Erzeugenden ($\alpha 1$, $\alpha 2$, $\alpha 3$) ungleich Null in bezug auf eine Ebene (P1, P2), die senkrecht zur Achse dieses Konusabschnitts ist, aufweist, wobei die mittlere Neigung der Fläche für die Gesamtheit der Erzeugenden ebenfalls in bezug auf die Ebene ungleich Null ist,
- die lokale Neigung entlang jeder Erzeugenden jeder Fläche bis auf weniger als 20% konstant ist und

- die mittlere Neigung jeder Erzeugenden jeder Fläche unterhalb von 30% des Durchschnitts $\alpha_o$ der mittleren Neigungen der drei Flächen liegt,

wodurch der Retroreflektor eine ausreichende Korrektur des Wertes des Winkels δ der Geschwindigkeitsaberration gewährleistet, die zumindest näherungsweise der Relation

$$\alpha_o = 0.2 \times \delta/k$$

gehorcht, wobei k ein intrinsischer Parameter des Retroreflektors ist, der von der Anzahl, der Geometrie und dem Brechungsindex oder den Brechungsindizes des Mediums oder der Medien, das (die) das Volumen des Retroreflektors bildet (bilden), abhängig ist.

2. Reflektor nach Anspruch 1, dadurch gekennzeichnet, daß mindestens eine Fläche (F'1) aus mindestens zwei ebenen dreieckigen Unterflächen (SF1, SF2) gebildet sind, die an einer Bruchlinie (K) aneinanderstoßen, wobei die Ränder jeder Unterfläche in bezug auf die Achse (Z1) der Fläche senkrechte Ebene (P1) im wesentlichen gleiche Neigungen ($\alpha b_{11}$, $\alpha_{b21}$) aufweisen.

3. Retroreflektor nach Anspruch 2, dadurch gekennzeichnet, daß jede Fläche aus im wesentlichen identischen Unterflächen gebildet wird.

4. Retroreflektor nach Anspruch 2, dadurch gekennzeichnet, daß jede Fläche aus zwei identischen Unterflächen gebildet wird.

5. Retroreflektor nach einem der Ansprüche 1 bis 4, dadurch gekennzeichnet, daß die drei Flächen identisch sind.

6. Retroreflektor nach einem der Ansprüche 1 bis 5, dadurch gekennzeichnet, daß jede Fläche entlang ihren Erzeugenden mindestens eine Folge koaxialer Stufen (M1, M2) aufweist, wobei aneinandergrenzende Stufen eine lokale Neigung der Erzeugenden ($\alpha$) definieren.

7. Retroreflektor nach Anspruch 6, dadurch gekennzeichnet, daß die Fläche mindestens zwei Folgen paralleler Stufen aufweist, die durch einen Übergang getrennt sind, dessen Höhe parallel zur Achse der Fläche einem Phasensprung eines Vielfachen von 2 π von mindestens 1 entspricht.

8. Retroreflektor nach einem der Ansprüche 1 bis 7, dadurch gekennzeichnet, daß die lokale Neigung der Erzeugenden mindestens einer der Flächen als Funktion des Abstands von der Spitze variiert.

9. Retroreflektor nach Anspruch 8, dadurch gekennzeichnet, daß diese lokale Neigung gleichförmig variiert.

10. Retroreflektor nach einem der Ansprüche 1 bis 9, dadurch gekennzeichnet, daß die Neigung der Erzeugenden einer Fläche umfangsseitig zwischen den Kanten, die an diese Fläche grenzen, variiert.

11. Retroreflektor nach einem der Ansprüche 1 bis 10, dadurch gekennzeichnet, daß das Volumen des Retroreflektors leer ist und der Koeffizient k gleich 1 ist.

12. Retroreflektor nach einem der Ansprüche 1 bis 10, dadurch gekennzeichnet, daß das Volumen des Retroreflektors aus einem homogenen Material mit Brechungsindex n gebildet wird und der Koeffizient k wie folgt lautet:

$$k = n \times cos \frac{[arc\ sin\ ((sin\ i_0)\ /n)]}{cos\ i_0}$$

wobei $i_0$ mindestens etwa 30° beträgt.

13. Retroreflektor nach einem der Ansprüche 1 bis 10, dadurch gekennzeichnet, daß das Volumen des Retroreflektors entlang den reflektierenden Oberflächen der Flächen homogene Platten mit einem Brechungsindex n aufweist und zwischen diesen Platten leer ist und der Koeffizient k wie folgt lautet:

$$k = \sqrt{3} \times cos[Arcsin\ (\sqrt{2/3} \times 1/n)].$$

**Claims**

1. Cube-corner retroreflector for laser telemetry adapted to correct the speed aberration angle δ due to relative displacement between the retroreflector and the associated laser station, the retroreflector including three substantially orthogonal mirror surfaces (F1, F2, F3) defining three substantially orthogonal edges (z2, z3, z3) converging at an apex (S), each edge being associated with that of said surfaces which is substantially orthogonal to it, the three surfaces being either all concave or all convex relative to the cube-corner internal volume of the retroreflector,

 characterised in that:

- the shape of each surface is at least approximately that of a portion (C1) of a cone whose axis is coincident with the associated edge, each of the generatrices of this cone portion having a non-null average generatrix slope ($\alpha 1$, $\alpha 2$, $\alpha 3$) relative to a plane (P1; P2) perpendicular to the axis of said cone portion, the average slope of the surface for all the generatrices being also non-null relative to said plane,

- the local slope along any generatrix of each surface is constant to within 20%, and
- said average slope of each generatrix of each surface is within 30% of the average $\alpha_0$ of the average slopes of the three surfaces,
- the retroreflector thereby assuring a correction of the speed aberration angle $\delta$ which at least approximately satisfies the equation:

$$\alpha_0 = 0.2\ \delta/k$$

where $\underline{k}$ is an intrinsic parameter of the retroreflector dependent on the number, the geometry and the refractive index or indices or the media constituting the volume of said retroreflector.

2. Retroreflector according to claim 1 characterised in that at least one surface (F'1) is formed by at least two triangular plane facets (SF1, SF2) contiguous at a break line (K), the edges of each facet having substantially equal slopes ($\alpha_{b11}$, $\alpha_{b21}$) (relative to the plane (P1) perpendicular to the axis (Z1) of said surface.

3. Retroreflector according to claim 2 characterised in that each surface is made up of substantially identical facets.

4. Retroreflector according to claim 2 characterised in that each surface is made up of two identical facets.

5. Retroreflector according to any one of claims 1 to 4 characterised in that said three surfaces are identical.

6. Retroreflector according to any one of claims 1 to 5 characterised in that each surface has along its generatrices at least one succession of coaxial steps, adjacent steps defining a local generatrix slope ($\alpha$).

7. Retroreflector according to claim 6 characterised in that said surface includes at least two successions of parallel steps separated by a transition whose height parallel to the axis of the surface corresponds to a phase difference equal to a multiple of $2\pi$ at least equal to one.

8. Retroreflector according to any one of claims 1 to 7 characterised in that the local slope of the generatrices of at least one of said surfaces varies with the distance from said apex.

9. Retroreflector according to claim 8 characterised in that said local slope various monotonously.

10. Retroreflector according to any one of claims 1 to 9 characterised in that the slope of the generatrices of a surface varies circumferentially between the edges flanking said surface.

11. Retroreflector according to any one of claims 1 to 10 characterised in that the interior volume of said retroreflector is empty and the value of the coefficient $\underline{k}$ is 1.

12. Retroreflector according to any one of claims 1 to 10 characterised in that the interior volume of said retroreflector is constituted by a homogeneous material of refractive index $\underline{n}$ and the value of the coefficient $\underline{k}$ is given by the equation:

$$k = n.cos\ \frac{[arc\ sin\ ((sin\,i_o)\,/\,n)]}{cos\ i_o}$$

where $i_0$ is at least approximately 30°.

13. Retroreflector according to any one of claims 1 to 10 characterised in that the interior volume of said retroreflector includes homogeneous plates with refractive index $\underline{n}$ at the mirror surfaces and is empty between said plates and the value of said coefficient $\underline{k}$ is given by the equation:

$$k = \sqrt{3}\ .cos\ [Arcsin\ (\sqrt{2/3}.1/n)]$$

Fig.1

EP 0 661 559 B1

Fig. 2

Fig. 3

Fig.4

Fig.9

Fig.10

Fig.11

Arc secondes

Fig. 5

Arc secondes

Arc secondes

Fig. 6

Arc secondes

Fig. 7

Fig. 8